# EUROPEAN PATENT SPECIFICATION

(11) **EP 2 309 700 B1**
(45) Date of publication and mention of the grant of the patent: **27.02.2013**
(21) Application number: 09305958.2
(22) Date of filing: 08.10.2009
(51) Int. Cl.: H04L 29/08, H04L 29/06, G06F 21/00

(54) **A method and a system for transferring data in a telecommunication network, a server, a storage, a computer program and a computer program product**
Verfahren und System zur Übertragung von Daten in einem Telekommunikationsnetzwerk, Server, Speicher, Computerprogramm und Computerprogrammprodukt
Système et procédé pour le transfert de données dans un réseau de télécommunication, serveur, stockage, programme informatique et produit de programme informatique

(43) Date of publication of application: 13.04.2011
(73) Proprietor: Alcatel Lucent, 75007 Paris (FR)
(72) Inventor: Wahl, Stefan, 71707, Schwieberdingen (DE); Drewniok, Marc, 73728, Esslingen a. N. (DE); Kessler, Marcus, 73728, Esslingen a. N. (DE)
(74) Representative: Wetzel, Emmanuelle

(56) References cited:
- US-A1- 2003 188 153
- US-A1- 2003 204 602
- US-A1- 2004 015 724
- US-A1- 2007 067 332
- US-A1- 2008 126 357
- BATTEN C ET AL: "pStore: A Secure Peer-to-Peer Backup System (MIT-LCS-TM-632)" INTERNET CITATION 8 December 2001 (2001-12-08), XP002233336 Retrieved from the Internet: URL:http://kbarr.net/static/pstore/pStore. pdf> [retrieved on 2003-03-04]

## Description

### Field of the invention

The invention relates to a method for transferring data in a computerized network.

### Background

In an example for the implementation of a distributed storage an entire set of data is encrypted and then transferred entirely to a single storage unit of at distributed storage system.

However transferring entire sets of data, even encrypted, to a single storage unit, makes an attempt to breach the encryption and obtain the entire set of data easy. Data security in this case depends on the strength of the encryption only.

In another example a single set of data is split up into parts and individual parts of the single set of data are transferred to different storage units of a distributed storage.

This means that for multiple sets of data a header is needed for each part of each set of data. Furthermore this way of splitting up the set of data may easily allow not authorized access to the data transferred to the distributed storage, because the inherent structure of the parts and the headers is well known.

US2004/015724A1 discloses a transparent secure file storage in which network data files are secure through the operation of an infrastructure gateway based network file access appliance. Network file data corresponding to network pocket payload data are further reduced to a sequence of data blocks that are secured through any combination of block encryption, impression and digital signatures.

Thus, storing multiple sets of data, e.g. files from a company server, on a distributed storage, e.g. in cloud computing, with the aforementioned methods either is susceptible to breaching the encryption or requires a large overhead and a clear structure within the stored parts, that makes unauthorized access less difficult.

### Summary

The object of the invention is thus to improve the transfer of data to a distributed storage.

The main idea of the invention is to transfer data in a computerized network, wherein a first data block is transferred between a first server and a second server, said first data block containing a first data segment determined depending on a first file, and a second data segment determined depending on a second file. This means that files, are split up in data segments and individual data segments of different files are combined to data blocks that are stored on a distributed storage. This way each data block contains data segments of different sets of data. This means that, because the data blocks don't contain information about start and end of a certain data segment, said data segments, and therefore said files, can't be accessed without further information about the structure of the data block that is not sent to said distributed storage.

Advantageously said first server determines said first data segment depending on a first fragment of said first set of data or of a first encrypted set of data, or said second data segment depending on a second fragment of said second set of data or of a second encrypted set of data, This means that the sets of data, e.g. files, are split up in fragments and data blocks containing only fragments of the sets of data. Thus no single storage device of said distributed storage stores all data segments required to re-assemble a certain set of data, i.e. file. This makes unauthorized access to the sets of data more difficult.

Advantageously said first server determines said first data segment depending on a first encryption key or said second data segment depending on a second encryption key. This means that the segments are stored encrypted which adds to the data security.

Advantageously said first encrypted set of data or said second encrypted set of data contains error correction code, and said first set of data or said second set of data is recreated from less than all of said data blocks.

Further developments of the invention can be gathered from the dependent claims and the following description.

### Brief description of the figures

In the following the invention will be explained further making reference to the attached drawings.
Fig. 1 schematically shows part of a computerized network according to an embodiment of the invention.
Fig. 2 schematically shows some typical data structures according to said embodiment of the invention.
Fig. 3 schematically shows a table according to said embodiment of the invention.
Fig. 4 schematically shows a flow chart according to said embodiment of the invention.

### Detailed description of the embodiments

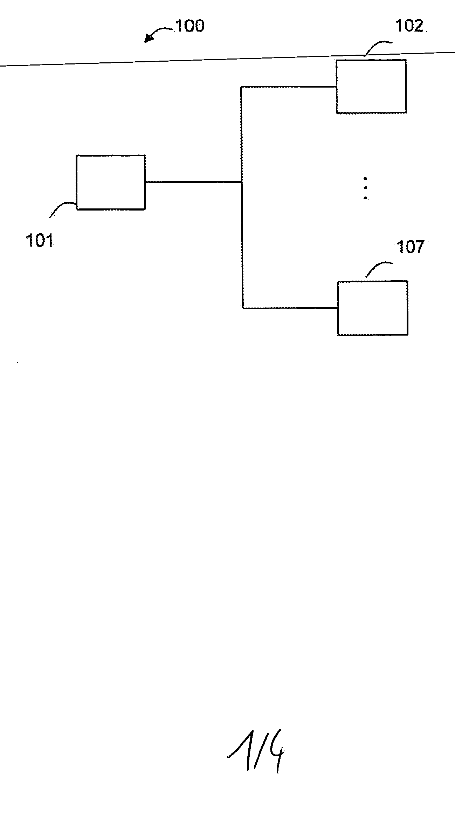

A first example of an embodiment of the invention is described below making reference to figures 1, 2, 3 and 4.

Goal of said fist example is to store two sets of data, e.g. two files, on a distributed storage.

Fig. 1 shows part of a computerized network 100 according to said first example.

Said computerized network 100 comprises seven servers 101, ..., 107. Said servers 101, ..., 107 are identified by consecutively numbered storage identifiers A1, ..., A7.

Said storage identifiers A1, ..., A7 are for example internet protocol addresses of said corresponding servers 101, ..., 107. Said storage identifiers A1, ..., A7 may be any other identifier of said servers 101, ..., 107, like a name according to the domain name system (well known as DNS).

Said internet protocol addresses are for example read by said first server 101 from a mapping stored on said first server 101 in a first non-volatile storage.

Said servers 101, ..., 107 are connected to each other via one data link or multiple a data links.

According to said first example said distributed storage comprises said server 101, ..., 107. Alternatively said distributed storage may include more or less servers. Alternatively said distributed storage may not include said first server 101.

Said data link is for example an internet protocol connection (well known as IP connection) or any other type of data connection.

Said servers 101 ..., 107 may be connected to each other via multiple network nodes or directly.

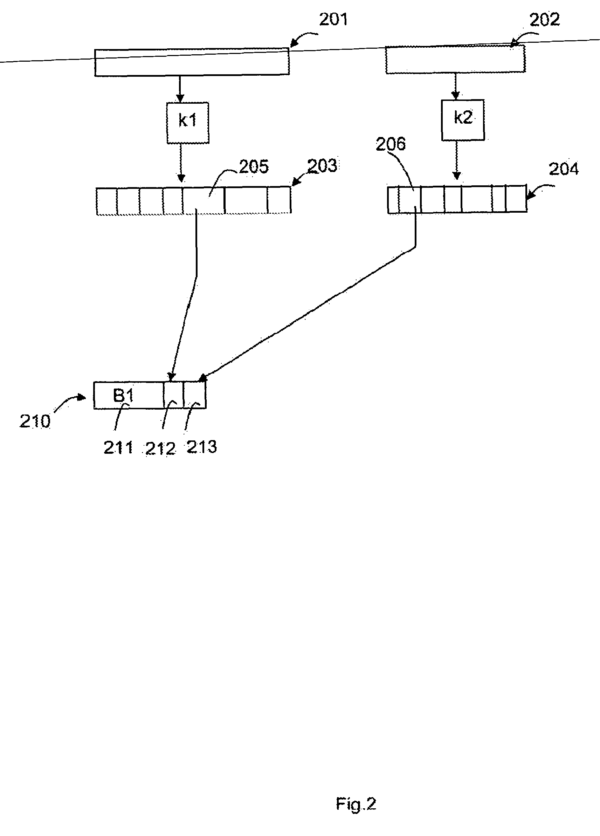

Said figure 2 schematically shows a first set of data 201 and a second set of data 202.

Said first server 101 may be adapted to store said sets of data 201, 202 in a first volatile memory of said first server 101. Alternatively said sets of data 201, 202 may be stored at least temporarily on said first non-volatile storage.

Furthermore said figure 2 schematically shows a first encrypted set of data 203 and a second encrypted set of data 204. Said first server 101 may be adapted to encrypt said sets of data 201, 202 to determine said encrypted sets of data 203. 204 using a first encryption key k1 and a second encryption key k2 respectively.

Methods for encrypting sets of data, e.g. using Twofish encryption or the symmetric advanced encryption standard (well known as AES), are well know to a person skilled in the art and not further explained here.

Additionally said first server 101 is adapted to fragment said encrypted sets of data 203, 204 into data fragments. Said first server 101 is for example adapted to randomly fragment each of said encrypted sets of data 203, 204 into the same amount of fragments. Said fragments may be of same size, e.g. 128bit or different, arbitrarily, e.g. randomly, chosen size,

Alternatively said first server 101 may be adapted to fragment said encrypted sets of data 203, 204 into different amounts of fragments. This is particularly useful in case more than two encrypted sets of data are to be stored.

Any of the sets of data or encrypted sets of data may be padded, i.e. filled, with additional, e.g. randomly selected, bits.

Furthermore said first server 101 is adapted to determine data blocks from said data fragments.

Said figure 2 schematically shows a first data block 210 as an example for said data blocks. Said first data block 210 comprises a first header 211, a first data segment 212 and a second data segment 213.

Said first data block 210 is determined by said first server 101 depending on a first data fragment 205 and a second data fragment 206. Said first data fragment 205 and said second data fragment 206 are, e.g. randomly or consecutively, chosen by said first server 101 from said data fragments of said first encrypted set of data 203 and said second encrypted set of data 204 respectively.

Additionally the order of said first data segment 212 and said second data segment 213 in said first data block 210 is determined randomly by said first server 101.

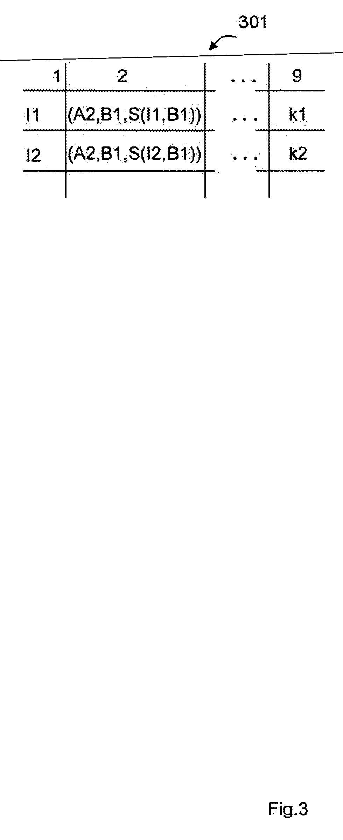

In order to be able to reconstruct said sets of data 201, 202 from said data blocks, said first server 101 is adapted to gather and store information about said data blocks. According to said first example a first table 301, as depicted in figure 3, is stored in said first non-volatile storage.

Said table 301 consist of a first column containing in a first row a first data identifier I1 of said first set of data 201 and in a second row a second data identifier I2 of said second set of data 202.

Columns two to eight contain in each row 3-tuples each containing one of said storage identifiers A1, ..., A7, said block identifiers B1, ..., B7, and a segment identifier S(I1,B1), ..., S(I1,B7), S(I2,B1), ..., S(I2, B7) each.

Said segment identifiers S(I1,B1), ..., S(I1,B7), S(I2,B1), ...,S(I2,B7) are determined by said first server 101 for each of said data segments. Said segment identifiers S(I1,B1), ..., S(I1,B7), S(I2,B1), ...,S(I2,B7) references a position of each of said data segments in their respective data block. Said position is for example referenced via a Bit offset for the starting address of each of said data segments in each of said data blocks.

As an example the determination of a first segment identifier S(I1,B1) and a second segment identifier S(I2,B1) as shown in table 301 is explained below. All other segment identifiers are determined likewise.

Said first segment identifier S(I1,B1) is set to the starting address of said first data segment 212 in said first data block 210. Additionally said second segment identifier S(I2,B1) is set to the starting address of said second data segment 213 in said first data block 210.

Said first server 101 is adapted to places each randomly chosen data fragment into any randomly chosen data segment of any randomly chosen data block. Additionally said first server 101 may be adapted to place only a single data fragment of a specific set of data into a certain data block.

Said table 301 is further explained using said first data block 210 as example. Information about any other data block is stored in the same way.

Said table 301 indicates the storage location of said first data fragment 205 of said first encrypted set of data 203. According to said table 301, said first data fragment 205 is stored on said first server 101 in said first data block 210 as indicated by said 3-touple in line one, column two. Also from said first segment identifier S(I1,B1) contained in said 3-touple the starting position of said first data segment 212 containing said first data fragment 205 can be derived. The length of said first data fragment 205 can be derived from the starting address of said second data fragment 206 or the overall length of said first data block 210 in case said first data fragment 205 would be the last data fragment of said first data block 210.

Additionally to the storage information, said first encryption key k1 and said second encryption key k2 are stored in a last column, i.e. column 9, of said table 301 in said first row and said second row respectively.

According to said first example seven data blocks including two data segments each are determined this way.

Said data blocks according to said first example are identified by consecutive data block identifiers B1, ..., B7 respectively. Said data block identifiers are for example a consecutive numbering of said data blocks starting at One, e.g. B1=1, ..., D7=7.

Said first header 211 contains said first data block identifier B1, identifying said first data block 210.

Said first data block identifier B1 is set for example to One by said first server 101, stored in said first table 301 and said first header 211. Said first data block identifier B1 may be any other identifier, like a random number or a literal.

Additionally said first server 101 is adapted to transfer, i.e. to send or receive, said data blocks.

Said first server 101 is adapted to determine, e.g. randomly, said storage identifiers as a destination for each of said data blocks. Additionally said server 101 is adapted to send each of said data blocks in a first message to the server corresponding to the determined storage identifier. Said first message contains a first indicator, e.g. a bit, indicating the request to store said first data block 210.

Additionally said first server 101 is adapted to store said storage identifier in the appropriate 3-tuple in said first table 301.

Said first storage identifier is for example said internet protocol address of said first data storage 111.

Additionally said first server 101 is adapted to request said data blocks from their respective storage.

To that end said first server 101 is adapted to read said information about said storage location from said first table 301 stored on said non-volatile storage.

According to said first example all servers, data blocks and data segments are selected by said first server 101 randomly. Alternatively the order of said distributed storages said data blocks or said data segments may be selected consecutively.

In order to retrieve a certain set of data from said distributed storage, said first server 101 is adapted to send a second message, e.g. as burst message to all servers, requesting all data blocks a set of data is comprised of. Said second message is determined by said first server 101 depending on said information about said storage location stored in said first table 301.

According to said first example said first server 101 is adapted to look up said information about said storage location in said table 301 upon a trigger. Such trigger is for example a user input received by said first server 101 via user interface. Said user input identifies said first set of data 201 by means of said first data identifier 11 or said second set of data 202 by means of said second data identifier I2.

Said first server 101 is adapted to determine said second message to request said data blocks by looking up said storage identifiers, i.e. said first internet protocol addresses of said servers, in said table 301. Said second message is sent to said internet protocol addresses of said servers via said internet protocol.

Furthermore said second message contains a second indicator that said data blocks are requested from said servers. Said indicator may be a bit indicating said request. Additionally said second message contains said data block, identifiers B1, ..., B7.

Said first server 101 is adapted to wait for a third message in response to sending said second message. According to said first example said first server 101 is adapted monitor all incoming messages to detect said third message containing any of said data blocks.

The assembling of said sets of data is explained by example of said first set of data 201. Any other set of data is assembled by said first server 101 likewise.

Said first server 101 is adapted to assemble said first set of data 201 depending on said data blocks received from said distributed storage in said third messages.

According to said first example, said first server 101 is adapted to assemble said first encrypted set of data 204 by consecutively looking up said data segments in all data blocks according to the information stored in the row of said table 301 that is indicated by said data identifier I1.

Said first server 101 is adapted to decipher said first encrypted set of data 204 using said first encryption key k1, stored in said table 301,

As example for all servers of said distributed data storage capable of storing data blocks, a second server 107 is described below. All other servers are adapted likewise.

According to said first example said second server 107 is adapted to store said first data block 210 upon receipt of said first message. To that end said second server 107 is adapted to monitor all incoming messages and to determine if an incoming message contains said first indicator or said first data block 210. Furthermore said second server 107 is adapted to store said first data block 210 if it was determined that said first data block 210 was received.

Furthermore according to said first example said second server 107 is adapted to determine said first data block identifier B1 from said first message and store said first data identifier B1 in a look-up table together with a reference to the storage location of said first data block 210 on said second server 107.

Additionally said second server 107 is adapted to transfer said first data block 210 upon receipt of said second message. To that end said second server 107 is adapted to monitor all incoming messages to determine if said second message is received, e.g. by monitoring said bit in said messages.

Additionally said second server 107 is adapted to send a third message containing said first data block 210 to said server 101 upon receipt of said second message.

Furthermore said second server 107 is adapted to determine said first data block identifier B1 from said second message and determine said third message containing said first data block 210 by looking up said storage sector in said look-up table.

According to said first example, said third message is sent to said server 101 using a second internet protocol address of said server 101. Said second internet protocol address is received as return address in said second message.

The goal of a first method according to the invention is to transfer said sets of data to said distributed storage, According to said first example said first method starts as soon as two sets of data need to be stored.

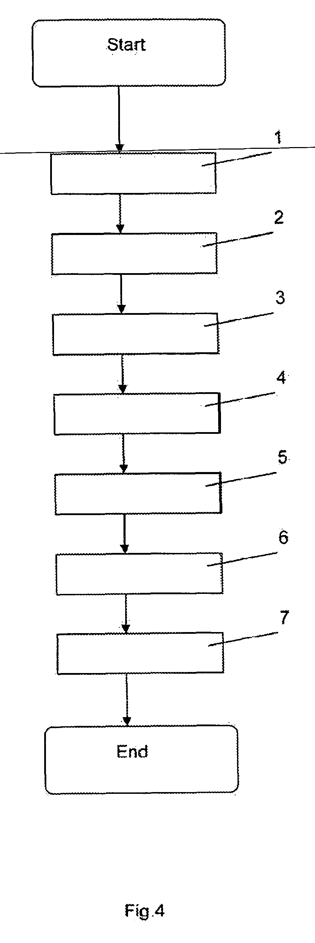

Below said first method is described referencing figure 4 and using said first set of data 201 and said second set of data 202 as example. Said first method applies likewise to any other amount of sets of data.

After the start of said first method a step 1 is executed.

In said step 1 all sets of data that need to be stored on said distributed storage are determined by means of their data identifier. A set of data may be a file or a folder as defined by an operating system that is used to run said first server 101. According to said first example only said first set of data 201 and said second set of data 202 need to be transferred. Afterwards a step 2 is executed.

In said step 2 each set of data is encrypted. According to said first example said first set of data 201 is encrypted using said first encryption key k1 and said second set of data 202 is encrypted using said second encryption key k2. Said encrypted sets of data are stored in a volatile storage on said first server 101. Said first encrypted set of data 203 or said second encrypted set of data 204 may additionally contain error correction code, e.g. a forward error correction code like a Reed-Solomon-Code, or manipulation detection code, e.g. a hash value or a cyclic redundancy check checksum. Afterwards a step 3 is executed.

In said step 3 each encrypted set of data is fragmented. According to said first example said first encrypted set of data 203 and said second encrypted set of data 204 are fragmented into 7 randomly sized fragments each. Afterwards a step 4 is executed.

In said step 4 each header of each data block is determined. According to said first example said first data block 210 contains said first header 211. Said first header 211 comprises said first data block identifier B1. Said first. data block identifier B1 is set to B1=1. All other headers are determined likewise using corresponding storage identifiers and data identifiers. Afterwards a step 5 is executed.

In said step 5 each data block is assembled by combining its header with data segments resulting from fragmenting said encrypted sets of data. According to said first example each data block contains at least one data fragment of each encrypted set of data. According to said first example said first data block 210 is assembled to comprise said first header 211, said first data segment 212, containing said first data fragment 205, and said second data segment 213, containing said second data fragment 206. To indicate the position of said first data segment 212 in said first data block 210, said first segment identifier S(I1,B1) is set to the starting address of said first data segment 212. Likewise said second data segment identifier S(I2,B1) is set to the starting address of said second data segment 213. Afterwards a step 6 is executed.

In said step 6 said information about said storage location is stored. According to said first example said table 301 is generated and stored. Afterwards a step 7 is executed.

In said steep 7 each data block is sent to a random server of the distributed storage. Said first table 301 is amended to include the storage identifier for each data block. According to said first example said first message is determined and sent. Afterwards said first method ends.

The goal of a second method according to the invention is to retrieve data blocks stored on said distributed storage.

Said second method is described using said first set of data 201 as an example but applies to any set of data as well.

Said second method starts, whenever said first set of data 201 needs to be retrieved from said distributed storage. According to said first example said second method starts, whenever said user inputs said first data identifier I1 using said user interface.

After said second method started a step 20 is executed.

In said step 20 said second message is determined. According to said first example said second message is determined to include all data block identifier B1, ..., B7 depending on said table 301. Said second message is determined to contain said first storage identifier A1 and said first block identifier B1. Afterwards a step 21 is executed.

In step 21 said second message is sent. According to said first example, said second message is sent to all servers that according to said first table 301 contain data blocks of said first set of data 201. Afterwards a step 22 is executed.

In said step 22 a timer is started to wait for said third messages. According to said second method, said timer is a clock initialized with Zero. Afterwards a step 23 is executed.

In said step 23 a test is performed to determine if said timer exceeds a first threshold. According to said second example a test is performed to determine, whether said timer exceeds 500 milliseconds. In case said timer exceeds said first threshold said second method ends, for example with an error message. Otherwise a step 24 is executed.

In said step 24. a test is performed to check whether all or all except one of the requested data blocks were received. To that end the block identifiers of the data blocks received are compared to the entries in said first table 301. In case all of the requested data blocks or all but one of the requested data block were received a step 25 is executed. Otherwise said timer is increased, e.g. by 5 milliseconds, and said step 23 is executed.

In said step 25 said first encrypted set of data 203 is assembled using all available data fragments of all data blocks received with said third messages. In case one data block is missing, an additional step is executed to recreate said first encrypted set of data 203 or said second encrypted set of data 204 from less than all of said data blacks by means of decoding said error correction code. Afterwards a step 26 is eye-cuted.

In said step 26 said first encrypted set of data 203 is deciphered using said first encryption key k1 to determine said first set of data 201. Afterwards said second method ends.

The goal of a third method according to the invention is to store said data blocks on said servers 101, ..., 107.

Said third method is described using said first data block 210 as an example. Said third method starts whenever said first message is received. Afterwards a step 30 is executed.

In said step 30 said first data block 210 received in said first message is stored. Additionally said first data block identifier B1 is determined and stored separately in said look-up table. Afterwards said third method ends.

The goal of a fourth method according to the invention is to send said data blocks from said data storages 111, 112, ..., 119 to said first server 101.

Said fourth method is described using said first data block 210 was an example. Said fourth method starts whenever said second message is received. Afterwards a step 40 is executed.

In said step 40 said first data block identifier B1. is determined from said second message and used to look up said storage location of said first data block 210 in said look-up Lable. Afterwards said first data block 210 is read and sent in said third message. According to said first example, said third message is addressed using said internet protocol address received in said second message. Afterwards said fourth method ends.

The invention is neither limited to determining seven data blocks nor to using seven servers or fragments. Any other number or order of data blocks and servers may be used. Furthermore the number of data blocks and the number of servers may differ from each other.

All of the aforementioned methods may be implemented as a computer program that, when executed on a computer performs all of the steps described in the method. Said computer program may be stored on a computer program product, like a compact disk or a hard disk.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples, recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labeled as 'processors', may be provided through the use of dedicated hardware as well as hardware capable of executing software in association with appropriate software, When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific, integrated circuit (ASIC), field programmable gate array (FPGA), read only memory (ROM) for storing software, random access memory (RAM), and non volatile storage, Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention, Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for transferring data in a computerized network, wherein a first data block (210) is transferred between a first server (101) and a second server (107), **characterized in that** said first data block (210) contains a first data segment (212) determined depending on a first fragment (205) of a first file (201), and a second data segment (213) determined depending on a second fragment (206) of a second file (202).

2. The method according to claim 1, **characterized in that** said first server (101) determines said first data segment (212) depending on a first fragment (205) of a first encrypted set of data (203), or said second data segment (213) depending on a second fragment (206) of a second encrypted set of data (204).

3. The method according to claim 1, **characterized in that** said first server (101) determines said first data segment (212) depending on a first encryption key (k1) or said second data segment (213) depending on a second encryption key (k2).

4. The method according to claim 1, **characterized in that** said first server (101) stores information (301) about said second server (107).

5. The method according to claim 1, **characterized in that** said first file or said second file are recreated from said data blocks.

6. The method according to claim 1, **characterized in that** a first encrypted set of data (203) or a second encrypted set of data (204) contain error correction code, and that said first file or said second file is recreated from less than all of said data blocks.

7. A system for transferring data in a computerized network, wherein said system comprises a first server (101) and a second server (107) for transferring a first data block (210), said first data block (210) containing a first data segment (212) determined depending on a first fragment (205) of a first file (201) and a second data segment (213) determined depending on a second fragment (206) of a second file (202).

8. A first server (101) for transferring data in a computerized network, adapted to determine a first data block (210) containing a first data segment (212) determined depending on a first fragment (205) of a first file (201) and a second data segment (213) determined depending on asecond fragment (206) of a second file (202), and to transfer said first data block (210).

9. A computer program for transferring data in a computerized network, wherein said computer program, when executed on a computer, causes the computer to transfer a first data block (210), said first data block (210) containing a first data segment (212) determined depending on a first fragment (205) of a first file (201) and a second data segment (213) determined depending on a second fragment (206) of a second file (202).

10. A computer program product for transferring data in a computerized network, comprising a computer usable medium having a computer readable program, wherein said computer readable program, when executed on a computer, causes the computer to transfer a first data block (210), said first data block (210) containing a first data segment (212) determined depending on a first fragment (205) of a first file (201) and a second data segment (213) determined depending on a second fragment (206) of a second file (202).

## Patentansprüche

1. Verfahren zur Übertragung von Daten in einem computergesteuerten Netzwerk, wobei ein erster Datenblock (210) zwischen einem ersten Server (101) und einem zweiten Server (107) übertragen wird, **dadurch gekennzeichnet, dass** der besagte erste Datenblock (210) ein erstes Datensegment (212), welches in Abhängigkeit von einem ersten Fragment (205) einer ersten Datei (201) bestimmt wird, und ein zweites Datensegment (213), welches in Abhängigkeit von einem zweiten Fragment (206) einer zweiten Datei (202) bestimmt wird, enthält.

2. Verfahren nach Anspruch 1, **dadurch gekennzeichnet, dass** der besagte erste Server (101) das besagte erste Datensegment (212) in Abhängigkeit von einem ersten Fragment (205) eines ersten verschlüsselten Datensatzes (203) oder das besagte zweite Datensegment (213) in Abhängigkeit von einem zweiten Fragment (206) eines zweiten verschlüsselten Datensatzes (204) bestimmt.

3. Verfahren nach Anspruch 1, **dadurch gekennzeichnet, dass** der besagte erste Server (101) das besagte erste Datensegment (212) in Abhängigkeit von einem ersten Verschlüsselungsschlüssel (k1) oder das besagte zweite Datensegment (213) in Abhängigkeit von einem zweiten Verschlüsselungsschlüssel (k2) bestimmt.

4. Verfahren nach Anspruch 1, **dadurch gekennzeichnet, dass** der besagte erste Server (101) Informationen (301) über den besagten zweiten Server (107) speichert.

5. Verfahren nach Anspruch 1, **dadurch gekennzeichnet, dass** die besagte erste Datei oder die besagte zweite Datei aus den besagten Datenblöcken zurückgewonnen wird.

6. Verfahren nach Anspruch 1, **dadurch gekennzeichnet, dass** ein erster verschlüsselter Datensatz (203) oder ein zweiter verschlüsselter Datensatz (204) einen Fehlerkorrekturcode enthält, und dass die besagte erste Datei oder die besagte zweite Datei aus weniger als allen der besagten Datenblöcke zurückgewonnen wird.

7. System zur Übertragung von Daten in einem computergesteuerten Netzwerk, wobei das besagte System einen ersten Server (101) und einen zweiten Server (107) für die Übertragung eines ersten Datenblocks (210) umfasst, wobei der besagte erste Datenblock (210) ein erstes Datensegment (212), welches in Abhängigkeit von einem ersten Fragment (205) einer ersten Datei (201) bestimmt wird, und ein zweites Datensegment (213), welches in Abhängigkeit von einem zweiten Fragment (206) einer zweiten Datei (202) bestimmt wird, enthält.

8. Erster Server (101) zur Übertragung von Daten in einem computergesteuerten Netzwerk, dazu ausgelegt, einen ersten Datenblock (210), der ein erstes Datensegment (212), welches in Abhängigkeit von einem ersten Fragment (205) einer ersten Datei (201) bestimmt wird, und ein zweites Datensegment (213), welches in Abhängigkeit von einem zweiten Fragment (206) einer zweiten Datei (202) bestimmt wird, enthält, zu bestimmen und den besagten ersten Datenblock (210) zu übertragen.

9. Computerprogramm zur Übertragung von Daten in einem computergesteuerten Netzwerk, wobei das besagte Computerprogramm bei dessen Ausführung auf einem Computer den Computer veranlasst, einen ersten Datenblock (210) zu übertragen, wobei der besagte erste Datenblock (210) ein erstes Datensegment (212), welches in Abhängigkeit von einem ersten Fragment (205) einer ersten Datei (201) bestimmt wird, und ein zweites Datensegment (213), welches in Abhängigkeit von einem zweiten Fragment (206) einer zweiten Datei (202) bestimmt wird, enthält.

10. Computerprogramm-Produkt zur Übertragung von Daten in einem computergesteuerten Netzwerk, umfassend ein computerlesbares Medium mit einem computerlesbaren Programm, wobei das besagte computerlesbare Programm bei dessen Ausführung auf einem Computer den Computer veranlasst, einen ersten Datenblock (210) zu übertragen, wobei der besagte erste Datenblock (210) ein erstes Datensegment (212), welches in Abhängigkeit von einem ersten Fragment (205) einer ersten Datei (201) bestimmt wird, und ein zweites Datensegment (213), welches in Abhängigkeit von einem zweiten Fragment (206) einer zweiten Datei (202) bestimmt wird, enthält.

## Revendications

1. Procédé de transfert de données dans un réseau informatisé, selon lequel un premier bloc de données (210) est transféré entre un premier serveur (101) et un second serveur (107), **caractérisé en ce que** ledit premier bloc de données (210) contient un premier segment de données (212) déterminé en fonction d'un premier fragment (205) d'un premier fichier (201), et un second segment de données (213) déterminé en fonction d'un second fragment (206) d'un second fichier (202).

2. Procédé selon la revendication 1, **caractérisé en ce que** ledit premier serveur (101) détermine ledit premier segment de données (212) en fonction d'un premier fragment (205) d'un premier ensemble crypté de données (203) ou ledit second segment de données (213) en fonction d'un second fragment (206) d'un second ensemble crypté de données (204).

3. Procédé selon la revendication 1, **caractérisé en ce que** ledit premier serveur (101) détermine ledit premier segment de données (212) en fonction d'une première clé de cryptage (k1) ou ledit second segment de données (213) en fonction d'une seconde clé de cryptage (k2).

4. Procédé selon la revendication 1, **caractérisé en ce que** ledit premier serveur (101) stocke des informations (301) à propos dudit second serveur (107).

5. Procédé selon la revendication 1, **caractérisé en ce que** ledit premier fichier ou ledit second fichier sont recréés à partir desdits blocs de données.

6. Procédé selon la revendication 1, **caractérisé en ce qu'**un premier ensemble crypté de données (203) ou un second ensemble crypté de données (204) contient un code de correction d'erreur et **en ce que** ledit premier fichier ou ledit second fichier est recréé à partir de moins que la totalité desdits blocs de données.

7. Système de transfert de données dans un réseau informatisé, ledit système comprenant un premier serveur (101) et un second serveur (107) pour transférer un premier bloc de données (210), ledit premier bloc de données (210) contenant un premier segment de données (212) déterminé en fonction d'un premier fragment (205) d'un premier fichier (201) et un second segment de données (213) déterminé en fonction d'un second fragment (206) d'un second fichier (202).

8. Premier serveur (101) pour transférer des données dans un réseau informatisé, adapté pour déterminer un premier bloc de données (210) contenant un premier segment de données (212) déterminé en fonction d'un premier fragment (205) d'un premier fichier (201), et un second segment de données (213) déterminé en fonction d'un second fragment (206) d'un second fichier (202), et pour transférer ledit premier bloc de données (210).

9. Programme informatique pour transférer des données dans un réseau informatisé, ledit programme informatique, lorsqu'il est exécuté sur un ordinateur, ayant pour effet que l'ordinateur transfère un premier bloc de données (210), ledit premier bloc de données (210) contenant un premier segment de données (212) déterminé en fonction d'un premier fragment (205) d'un premier fichier (201) et un second segment de données (213) déterminé en fonction d'un second fragment (206) d'un second fichier (202).

10. Produit de programme informatique pour transférer des données dans un réseau informatisé, comprenant un support utilisable par un ordinateur sur lequel se trouve un programme lisible par un ordinateur, ledit programme lisible par un ordinateur, lorsqu'il est exécuté sur un ordinateur, ayant pour effet que l'ordinateur transfère un premier bloc de données (210), ledit premier bloc de données (210) contenant un premier segment de données (212) déterminé en fonction d'un premier fragment (205) d'un premier fichier (201) et un second segment de données (213) déterminé en fonction d'un second fragment (206) d'un second fichier (202).
